(19) Europäisches Patentamt
European Patent Office
Office européen des brevets

(11) EP 2 752 509 B1

(12) # EUROPEAN PATENT SPECIFICATION

(45) Date of publication and mention of the grant of the patent:
**05.04.2017 Bulletin 2017/14**

(21) Application number: **11807704.9**

(22) Date of filing: **24.10.2011**

(51) Int Cl.:
***D01F 6/30*** $^{(2006.01)}$ ***C08F 210/16*** $^{(2006.01)}$
***C08L 23/08*** $^{(2006.01)}$ ***E01C 13/08*** $^{(2006.01)}$

(86) International application number:
**PCT/ES2011/070733**

(87) International publication number:
**WO 2013/060902 (02.05.2013 Gazette 2013/18)**

(54) **ARTIFICIAL GRASS YARN**

KUNSTGRASGARN

FIL DE GAZON SYNTHÉTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.07.2014 Bulletin 2014/28**

(73) Proprietor: **Dow Global Technologies LLC**
**Midland, MI 48674 (US)**

(72) Inventors:
- **SANDKUEHLER, Peter**
**8032 Zuerich (CH)**
- **BENSASON, Selim**
**CH 8806 Baech (CH)**

(74) Representative: **Boult Wade Tennant**
**Verulam Gardens**
**70 Gray's Inn Road**
**London WC1X 8BT (GB)**

(56) References cited:
**WO-A1-2006/066777**
**WO-A1-2009/101124**
**WO-A1-2010/006097**
**WO-A1-2012/056053**
**WO-A2-2011/002868**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 752 509 B1

**Description**

## Field of Invention

The instant invention relates artificial turf.

## Background of the Invention

Artificial turf yarn prepared from polyethylene at densities of about 0.900 g/$cm^3$ typically exhibit higher shrink values than those prepared from polyethylene having densities of about 0.935g/$cm^3$. Lower density polyethylene provides the turf yarn with higher durability, softness, and resiliency. Turf yarns prepared from lower density polyethylene also exhibit higher shrink. Turf yarns with high shrink shorten when the tufted carpet is coated with a polyurethane or latex backing, thereby reducing the pile height. In order to compensate for shrink, longer yarns are tufted to account for the length reduction caused by high shrink. Residual shrink in the yarn reflects potential energy and stresses in the material which can be released by heat or time in the installed artificial turf, which can cause yarn breaks or curling.

WO 2006/066777 relates to tapes and films of polyethylene, and more particularly to artificial turf made from such tapes, films or monofilaments.

WO 2010/006097 relates to polyethylene compositions, methods of producing the same, fibers made therefrom, method of making the same, fabrics made from such fibers, and method of making such fabrics.

## Summary of the Invention

The instant invention is an artificial turf and method of preparing same. In one embodiment, the instant invention provides an artificial turf comprising a turf yarn prepared from an ethylene-based polymer composition comprising: less than 100 percent by weight of the units derived from ethylene; and less than 30 percent by weight of units derived from one or more $\alpha$-olefin comonomers; wherein said ethylene-based polymer composition is characterized by having a Comonomer Distribution Constant of equal to or greater than 40, a vinyl unsaturation of less than 100 vinyls per one million carbon atoms present in the backbone of the ethylene-based polymer composition; a zero shear viscosity ratio (ZSVR) equal to or greater than 1.75; a density in the range of 0.915 to 0.930 g/$cm^3$, a melt index ($I_2$) in the range of from 0.8 to 5 g/10 minutes, a molecular weight distribution ($M_w/M_n$) in the range of from 2 to 3.6, and a molecular weight distribution ($M_z/M_w$) equal to or less than 3; and wherein the turf yarn exhibits the following properties (a) shrink of less than 4.8 %, and (b) curl of less than 0.5.

## Brief Description of the Drawings

For the purpose of illustrating the invention, there is shown in the drawings a form that is exemplary; it being understood, however, that this invention is not limited to the precise arrangements and instrumentalities shown.

**Fig. 1** is a schematic illustrating measurements used in calculating curl.
**Fig. 2** is a graph showing data from a double presaturation experiment.

## Detailed Description of the Invention

The instant invention is an artificial turf. The term "artificial turf," as used herein, is a carpet-like cover having substantially upright, or upright, polymer strands of artificial turf yarn projecting upwardly from a substrate. The term "artificial turf yarn" or "turf yarn" or "yarn" as used herein, includes fibrillated tape yarn, co-extruded tape yarns, monotape and monofilament yarn. A "fibrillated tape" or "fibrillated tape yarn," is a cast extruded film cut into tape (typically about 1 cm width), the film stretched and long slits cut (fibrillated) into the tape giving the tape the dimensions of grass blades. A "monofilament yarn" is extruded into individual yarn or strands with a desired cross-sectional shape and thickness followed by yarn orientation and relaxation in hot ovens. The artificial turf yarn forms the polymer strands for the artificial turf.

The artificial turf comprises a turf yarn prepared from an ethylene-based polymer composition comprising: less than 100 percent by weight of the units derived from ethylene; and less than 30 percent by weight of units derived from one or more $\alpha$-olefin comonomers; wherein said ethylene-based polymer composition is characterized by having a Comonomer Distribution Constant of equal to or greater than 40, a vinyl unsaturation of less than 100 vinyls per one million carbon atoms present in the backbone of the ethylene-based polymer composition; a zero shear viscosity ratio (ZSVR) equal to or greater than 1.75; a density in the range of 0.915 to 0.930 g/$cm^3$, a melt index ($I_2$) in the range of from 0.8 to 5 g/10 minutes, a molecular weight distribution ($M_w/M_n$) in the range of from 2 to 3.6, and a molecular weight

distribution ($M_z/M_w$) equal to or less than 3; and wherein the turf yarn exhibits the following properties (a) shrink of less than 4.8 %, and (b) curl of less than 0.5.

The ethylene-based polymer composition comprises (a) less than 100 percent, for example, at least 70 percent, or at least 80 percent, or at least 90 percent, by weight of the units derived from ethylene; and (b) less than 30 percent, for example, less than 25 percent, or less than 20 percent, or less than 10 percent, by weight of units derived from one or more $\alpha$-olefin comonomers. The term "ethylene-based polymer composition" refers to a polymer that contains more than 50 mole percent polymerized ethylene monomer (based on the total amount of polymerizable monomers) and, optionally, may contain at least one comonomer.

The $\alpha$-olefin comonomers typically have no more than 20 carbon atoms. For example, the $\alpha$-olefin comonomers may preferably have 3 to 10 carbon atoms, and more preferably 3 to 8 carbon atoms. Exemplary $\alpha$-olefin comonomers include, but are not limited to, propylene, 1-butene, 1-pentene, 1-hexene, 1-heptene, 1-octene, 1-nonene, 1-decene, and 4-methyl-1-pentene. The one or more $\alpha$-olefin comonomers may, for example, be selected from the group consisting of propylene, 1-butene, 1-hexene, and 1-octene; or in the alternative, from the group consisting of 1-hexene and 1-octene.

In one embodiment, ethylene-based polymer composition has a comonomer distribution profile comprising a monomodal distribution or a bimodal distribution in the temperature range of from 35°C to 120°C, excluding purge.

Any conventional ethylene (co)polymerization reaction processes may be employed to produce the ethylene-based polymer composition. Such conventional ethylene (co)polymerization reaction processes include, but are not limited to, slurry phase polymerization process, solution phase polymerization process, and combinations thereof using one or more conventional reactors, e.g. loop reactors, stirred tank reactors, batch reactors in parallel, series, and/or any combinations thereof.

In one embodiment, the ethylene-based polymer is prepared via a process comprising the steps of: (a) polymerizing ethylene and optionally one or more $\alpha$-olefins in the presence of a first catalyst to form a semi-crystalline ethylene-based polymer in a first reactor or a first part of a multi-part reactor; and (b) reacting freshly supplied ethylene and optionally one or more $\alpha$-olefins in the presence of a second catalyst comprising an organometallic catalyst thereby forming an ethylene-based polymer composition in at least one other reactor or a later part of a multi-part reactor, wherein at least one of the catalyst systems in step (a) or (b) comprises a metal complex of a polyvalent aryloxyether corresponding to the formula:

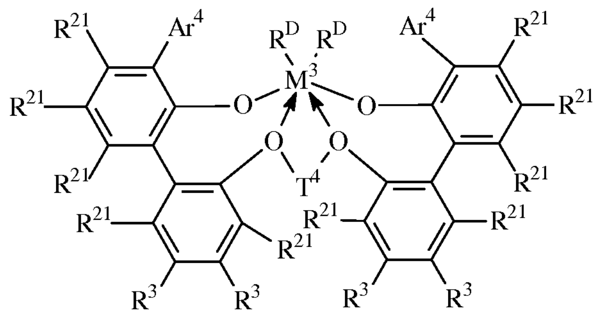

wherein $M^3$ is Ti, Hf or Zr, preferably Zr;

$Ar^4$ is independently in each occurrence a substituted $C_{9-20}$ aryl group, wherein the substituents, independently in each occurrence, are selected from the group consisting of alkyl; cycloalkyl; and aryl groups; and halo-, trihydrocarbylsilyl- and halohydrocarbyl- substituted derivatives thereof, with the proviso that at least one substituent lacks co-planarity with the aryl group to which it is attached;

$T^4$ is independently in each occurrence a $C_{2-20}$ alkylene, cycloalkylene or cycloalkenylene group, or an inertly substituted derivative thereof;

$R^{21}$ is independently in each occurrence hydrogen, halo, hydrocarbyl, trihydrocarbylsilyl, trihydrocarbylsilylhydrocarbyl, alkoxy or di(hydrocarbyl)amino group of up to 50 atoms not counting hydrogen;

$R^3$ is independently in each occurrence hydrogen, halo, hydrocarbyl, trihydrocarbylsilyl, trihydrocarbylsilylhydrocarbyl, alkoxy or amino of up to 50 atoms not counting hydrogen, or two $R^3$ groups on the same arylene ring together or an $R^3$ and an $R^{21}$ group on the same or different arylene ring together form a divalent ligand group attached to the arylene group in two positions or join two different arylene rings together; and

$R^D$ is independently in each occurrence halo or a hydrocarbyl or trihydrocarbylsilyl group of up to 20 atoms not counting hydrogen, or 2 $R^D$ groups together are a hydrocarbylene, hydrocarbadiyl, diene, or poly(hydrocarbyl)silylene group.

In general, the ethylene-based polymer composition may be produced via a solution polymerization according to the following exemplary process. All raw materials (ethylene, 1-octene) and the process solvent (a narrow boiling

range high-purity isoparaffinic solvent commercially available under the tradename Isopar E from ExxonMobil Corporation) are purified with molecular sieves before introduction into the reaction environment. Hydrogen is supplied in pressurized cylinders as a high purity grade and is not further purified. The reactor monomer feed (ethylene) stream is pressurized via mechanical compressor to a pressure that is above the reaction pressure, approximate to 5.17 MPa (750 psig). The solvent and comonomer (1-octene) feed is pressurized via mechanical positive displacement pump to a pressure that is above the reaction pressure, approximately 5.17 MPa (750 psig). The individual catalyst components are manually batch diluted to specified component concentrations with purified solvent (Isopar E) and pressurized to a pressure that is above the reaction pressure, approximately 5.17 MPa (750 psig). All reaction feed flows are measured with mass flow meters, independently controlled with computer automated valve control systems.

The continuous solution polymerization reactor system according to the present invention consist of two liquid full, non-adiabatic, isothermal, circulating, and independently controlled loops operating in a series configuration. Each reactor has independent control of all fresh solvent, monomer, comonomer, hydrogen, and catalyst component feeds. The combined solvent, monomer, comonomer and hydrogen feed to each reactor is independently temperature controlled to anywhere between 5° C to 50° C and typically 40 °C by passing the feed stream through a heat exchanger. The fresh comonomer feed to the polymerization reactors can be manually aligned to add comonomer to one of three choices: the first reactor, the second reactor, or the common solvent and then split between both reactors proportionate to the solvent feed split. The total fresh feed to each polymerization reactor is injected into the reactor at two locations per reactor roughly with equal reactor volumes between each injection location. The fresh feed is controlled typically with each injector receiving half of the total fresh feed mass flow. The catalyst components are injected into the polymerization reactor through specially designed injection stingers and are each separately injected into the same relative location in the reactor with no contact time prior to the reactor. The primary catalyst component feed is computer controlled to maintain the reactor monomer concentration at a specified target. The two cocatalyst components are fed based on calculated specified molar ratios to the primary catalyst component. Immediately following each fresh injection location (either feed or catalyst), the feed streams are mixed with the circulating polymerization reactor contents with static mixing elements. The contents of each reactor are continuously circulated through heat exchangers responsible for removing much of the heat of reaction and with the temperature of the coolant side responsible for maintaining isothermal reaction environment at the specified temperature. Circulation around each reactor loop is provided by a screw pump. The effluent from the first polymerization reactor (containing solvent, monomer, comonomer, hydrogen, catalyst components, and molten polymer) exits the first reactor loop and passes through a control valve (responsible for maintaining the pressure of the first reactor at a specified target) and is injected into the second polymerization reactor of similar design. As the stream exits the reactor, it is contacted with a deactivating agent, e.g. water, to stop the reaction. In addition, various additives such as anti-oxidants, can be added at this point. The stream then goes through another set of static mixing elements to evenly disperse the catalyst deactivating agent and additives. Following additive addition, the effluent (containing solvent, monomer, comonomer, hydrogen, catalyst components, and molten polymer) passes through a heat exchanger to raise the stream temperature in preparation for separation of the polymer from the other lower boiling reaction components. The stream then enters a two stage separation and devolatilization system where the polymer is removed from the solvent, hydrogen, and unreacted monomer and comonomer. The recycled stream is purified before entering the reactor again. The separated and devolatized polymer melt is pumped through a die specially designed for underwater pelletization, cut into uniform solid pellets, dried, and transferred into a hopper.

The ethylene-based polymer composition useful in embodiments of the inventive artificial turf is characterized by having a Comonomer Distribution Constant (CDC) of equal to or greater than 40. All individual values and subranges of equal to or greater than 40 are included herein and disclosed herein; for example, the CDC can be from a lower limit of 40, 80, 100, 150, 200, 250, 300, or 350. For example, the CDC of the ethylene-based polymer composition may be from 40 to 400, or from 100 to 300, or from 100 to 200, or from 40 to 80, or from 80 to 200 or from 80 to 400.

The ethylene-based polymer composition useful in embodiments of the inventive artificial turf is characterized by having a vinyl unsaturation of less than 100 vinyls per one million carbon atoms present in the backbone of the ethylene-based polymer composition (vinyls/1,000,000 C). All individual values and subranges from less than 100 vinyls/1,000,000 C are included herein and disclosed herein; for example, the amount of vinyl unsaturation can be from an upper limit of 50, 60, 70, 80, 90 or 100 vinyls/1,000,000 C.

The ethylene-based polymer composition useful in embodiments of the inventive artificial turf is characterized by having a total unsaturation of less than or equal to 150 total unsaturations per one million carbon atoms present in the backbone of the ethylene-based polymer composition (total unsaturations/1,000,000 C). All individual values and subranges from less than or equal to 150 total unsaturations /1,000,000 C are included herein and disclosed herein. For example, the amount of total unsaturation can be less than or equal to 150, or less than or equal to 125, or less than or equal to 100, or less than or equal to 70, or less than or equal to 50 /1,000,000 C.

The ethylene-based polymer composition useful in embodiments of the inventive artificial turf is characterized by having a zero shear viscosity ratio (ZSVR) equal to or greater than 1.75. All individual values and subranges of equal to or greater than 1.75 are included herein and disclosed herein; for example, the ZSVR of the ethylene-based polymer

can be from a lower limit of 1.75, 2, 2.2, 2.4, 2.6, 2.8 or 2.9.

The ethylene-based polymer composition useful in embodiments of the inventive artificial turf is further characterized by having a density in the range of 0.915 to 0.930 g/cm$^3$. All individual values and subranges from 0.915 to 0.930 g/cm$^3$ are included herein and disclosed herein; for example, the density can be from a lower limit of 0.915, 0.918, 0.920, 0.925, or 0.928 g/cm$^3$ to an upper limit of 0.918, 0.920, 0.925, 0.928, or 0.930 g/cm$^3$. For example, the density may be in the range of from 0.915 to 0.930 g/cm$^3$, or from 0.902 to 0.928 g/cm$^3$, or from 0.918 to 0.930 g/cm$^3$.

The ethylene-based polymer composition useful in embodiments of the inventive artificial turf is further characterized by having a melt index ($I_2$) in the range of from 0.8 to 5 g/10 minutes. All individual values and subranges from 0.8 to 5 g/10 minutes are included herein and disclosed herein; for example, the $I_2$ can be from a lower limit of 0.8, 1, 1.5, 2, 2.5, 3, 3.5, 4, or 4.5 g/10 minutes to an upper limit of 1.5, 2, 2.5, 3, 3.5, 4, 4.5 or 5 g/10 minutes. For example, the $I_2$ may be in the range of from 0.8 to 5, or from 1.5 to 5, or from 1 to 3.5, or from 2 to 4 g/10 minutes, or from 3 to 4 g/10 minutes.

The ethylene-based polymer composition useful in embodiments of the inventive artificial turf is further characterized by having a molecular weight distribution ($M_w/M_n$) in the range of from 2 to 3.6. All individual values and subranges from 2 to 3.6 are included herein and disclosed herein; for example, the $M_w/M_n$ can be from a lower limit of 2, 2.2, 2.4, 2.6, 2.8, 3, 3.2, 3.4 or 3.5 to an upper limit of 2.1, 2.3, 2.5, 2.7, 2.9, 3.1, 3.3, 3.5, or 3.6. For example, the $M_w/M_n$ may be in the range of from 2 to 3.6, or in the alternative, the $M_w/M_n$ may be in the range of from 2 to 3, or in the alternative, the $M_w/M_n$ may be in the range of from 2.4 to 3.6, or in the alternative, the $M_w/M_n$ may be in the range of from 2.4 to 3.4,

The ethylene-based polymer composition useful in embodiments of the inventive artificial turf is further characterized by having a molecular weight distribution ($M_z/M_w$) in the range of from less than 3. All individual values and subranges from less than 3 are included herein and disclosed herein; for example, the $M_z/M_w$ can be from an upper limit of 2.4, 2.6, 2.8 or 3.

A turf yarn prepared from the ethylene-based polymer exhibits the following properties: (a) shrink of less than 4.8%, and (b) curl of less than 0.5.

In one embodiment, the ethylene-based polymer composition comprises less than or equal to 100 parts, for example, less than 10 parts, less than 8 parts, less than 5 parts, less than 4 parts, less than 1 parts, less than 0.5 parts, or less than 0.1 parts, by weight of metal complex residues remaining from a catalyst system comprising a metal complex of a polyvalent aryloxyether, as described hereinabove, per one million parts of the ethylene-based polymer composition. The metal complex residues remaining from the catalyst system comprising a metal complex of a polyvalent aryloxyether in the ethylene-based polymer composition may be measured by x-ray fluorescence (XRF), which is calibrated to reference standards. The polymer resin granules can be compression molded at elevated temperature into plaques having a thickness of about 0.953 cm (3/8 of an inch) for the x-ray measurement in a preferred method. At very low concentrations of metal complex, such as below 0.1 ppm, ICP-AES (inductively coupled plasma-atomic emission spectroscopy) would be a suitable method to determine metal complex residues present in the ethylene-based polymer composition.

Any of the foregoing artificial turf yarns may include one or more additives. Nonlimiting examples of suitable additives include antioxidants, pigments, colorants, UV stabilizers, UV absorbers, curing agents, cross linking co-agents, boosters and retardants, processing aids, fillers, coupling agents, ultraviolet absorbers or stabilizers, antistatic agents, nucleating agents, slip agents, plasticizers, lubricants, viscosity control agents, tackifiers, anti-blocking agents, surfactants, extender oils, acid scavengers, and metal deactivators. Additives can be used in amounts ranging from less than about 0.01 wt% to 10 wt% based on the weight of the composition.

Nonlimiting examples of pigments include inorganic pigments that are suitably colored to provide an aesthetic appeal including various shades of green, white ($TiO_2$, rutile), iron oxide pigments, and any other color.

Examples of antioxidants are as follows, but are not limited to: hindered phenols such as tetrakis[methylene(3,5-di-tert- butyl-4-hydroxyhydro-cinnamate)] methane; bis[(beta-(3, 5-ditert-butyl-4-hydroxybenzyl)-methylcarboxyethyl)] sulphide, 4,4'-thiobis(2-methyl-6-tert-butylphenol), 4,4'-thiobis(2-tert-butyl-5-methylphenol), 2,2'-thiobis(4-methyl-6-tert-butylphenol), and thiodiethylene bis(3,5-di-tert-butyl-4-hydroxy)hydrocinnamate; phosphites and phosphonites such as tris(2,4-di-tert-butylphenyl)phosphite and di-tert-butylphenyl-phosphonite; thio compounds such as dilaurylthiodipropionate, dimyristylthiodipropionate, and distearylthiodipropionate; various siloxanes; polymerized 2,2,4-trimethyl-1,2-dihydroquinoline, n,n'-bis(1,4-dimethylpentyl-p-phenylenediamine), alkylated diphenylamines, 4,4'-bis(alpha, alpha-demthylbenzyl)diphenylamine, diphenyl-p-phenylenediamine, mixed di-aryl-p-phenylenediamines, and other hindered amine antidegradants or stabilizers. Antioxidants can be used in amounts of about 0.1 to about 5 wt% based on the weight of the composition

Examples of processing aids include but are not limited to metal salts of carboxylic acids such as zinc stearate or calcium stearate; fatty acids such as stearic acid, oleic acid, or erucic acid; fatty amides such as stearamide, oleamide, erucamide, or n,n'-ethylenebisstearamide; polyethylene wax; oxidized polyethylene wax; polymers of ethylene oxide; copolymers of ethylene oxide and propylene oxide; vegetable waxes; petroleum waxes; nonionic surfactants; and polysiloxanes. Processing aids can be used in amounts of about 0.05 to about 5 wt% based on the weight of the composition.

Examples of UV stabilizers and UV absorbers include but are not limited to hindered amine light stabilizers, benzophenone, benzotriazole, hydroxyphenyl triazine, 2-(2'-hydroxyphenyl)benzotriazoles, UVINOL 3000, TINUVIN P, IRGANOX 1098, UVINOL 3008, LAVINIX BHT, TINUVIN 320, IRGANOX 1010, IRGANOX 1076, and IRGAFOS 168. UVINOL, TINUVIN, IRGANOX AND IRGAFOS products are available from BASF.

A turf yarn prepared from the ethylene-based polymer may exhibit either or both of the defined shrink and curl characteristics. For those embodiments in which the turf yarn exhibits the specified shrink characteristic, all individual values and subranges of less than 4.8% are included herein and disclosed herein; for example, the shrink can be from an upper limit of 3.6%, 3.8%, 4%, 4.2%, 4.4%, 4.6% or 4.8%. For those embodiments in which the turf yarn exhibits the specified curl characteristic, all individual values and subranges of less than 0.5 are included herein and disclosed herein; for example, the shrink can be from an upper limit of 0.3, 0.34, 0.38, 0.4, 0.44, 0.48 or 0.5.

A turf yarn made from the ethylene-based polymer may optionally exhibit several other characteristics. In some embodiments, a turf yarn made from the ethylene-based polymer may exhibit one or both of the following properties: (a) elongation at break of at least 70%; and (b) stability of at least 0.9 cN/dtex. All individual values and subranges from at least 70% are included herein and disclosed herein; for example, the elongation at break can be from a lower limit of 70%, 74, 78, 81, or 83%. Likewise, all individual values and subranges from at least 0.9 cN/dtex are included herein and disclosed herein; for example, the stability can be from a lower limit of 0.9, 1.0, 1.02, 1.05, 1.08, 1.1, 1.12, 1.14, or 1.16.

In an alternative embodiment, the instant invention further provides a method of preparing an artificial turf comprising selecting an ethylene-based polymer composition comprising less than 100 percent by weight of the units derived from ethylene; and less than 30 percent by weight of units derived from one or more $\alpha$-olefin comonomers; wherein said ethylene-based polymer composition is characterized by having a Comonomer Distribution Constant of equal to or greater than 40, a vinyl unsaturation of less than 100 vinyls per one million carbon atoms present in the backbone of the ethylene-based polymer composition; a zero shear viscosity ratio (ZSVR) equal to or greater than 1.75; a density in the range of 0.915 to 0.930 g/cm$^3$, a melt index ($I_2$) in the range of from 0.8 to 5 g/10 minutes, a molecular weight distribution ($M_w/M_n$) in the range of from 2 to 3.6, and a molecular weight distribution ($M_z/M_w$) equal to or less than 3; and preparing a turf yarn from the ethylene-based polymer composition.

In an alternative embodiment, the instant invention provides an artificial turf, and method of producing the same, in accordance with any of the preceding embodiments, except that the turf yarn exhibits the following properties (a) shrink of less than 4.8 %, and (b) curl of less than 0.5.

In an alternative embodiment, the instant invention provides an artificial turf, and method of producing the same, in accordance with any of the preceding embodiments, except that the turf yarn exhibits a shrink of less than 4.5% (e.g., from 3.5% to 4.5%)

In an alternative embodiment, the instant invention provides an artificial turf, and method of producing the same, in accordance with any of the preceding embodiments, except that the turf yarn exhibits a curl of less than 0.4 (e.g., from 0.25 to 0.4).

In an alternative embodiment, the instant invention provides an artificial turf, and method of producing the same, in accordance with any of the preceding embodiments, except that the ethylene-based polymer composition has an $I_2$ from 3 to 4.

In an alternative embodiment, the instant invention provides an artificial turf, and method of producing the same, in accordance with any of the preceding embodiments, except that the turf yarn exhibits an elongation at break of at least 65%.

In an alternative embodiment, the instant invention provides an artificial turf, and method of producing the same, in accordance with any of the preceding embodiments, except that the turf yarn exhibits a stability of 0.9 cN/dtex.

**Artificial Turf Yarn Production**

The turf yarn may be made using any appropriate process for the production of artificial turf yarn from polymer compositions. The following describes one such process.

Turf yarns may be made by extrusion. Typical turf yarn extruders are equipped with a single PE/PP general purpose screw and a melt pump ("gear pump" or "melt pump") to precisely control the consistency of polymer volume flow into the die. Turf yarn dies have multiple single holes for the individual filaments distributed over a circular or rectangular spinplate. The shape of the holes corresponds to the desired yarn crossection profile, including for example, rectangular, dog-bone, and v-shaped. A standard spinplate has 50 to 160 die holes of specific dimensions. Lines typically have output rates fom 150 kg/h to 350 kg/h.

The turf yarns are typically extruded into a water-bath with typical die-water-bath distance of from 16 to 40 mm. Coated guiding bars in the water redirect the yarn filaments towards the first take off set of rollers. The linear speed of this set of rollers typically vary from 15 to 70 m/min. The takeoff set of rollers can be heated and used to preheat the yarn after the waterbath before entering the oven.

A yarn is passed over this first set of rollers, and then drawn through a heated air or water bath oven. The first

oven is either a hot air oven with co- or countercurrent hot air flow which can be operated from 50 to 150 °C or a hot water-oven wherein the yarn is oriented at temperatures from 50 to 98 °C. At the exit of the oven, the yarn is passed onto a second set of rollers that are run at a different (higher or lower) speed than the first set of rollers. The linear velocity ratio of the rollers after the oven to the rollers in front of the oven is referred to as either a stretching or relaxation ratio. In a three oven process, there are a total of four sets of rollers; a first set of rollers before the first oven, a second set of rollers between the first and second oven, a third set of roller between the second and third ovens, and a fourth set of rollers following the third oven.

## Examples

The following examples illustrate the present invention but are not intended to limit the scope of the invention.

Each of Inventive Composition Examples (Inv. Comp. Ex.) 1-3 contained 100 wt% of an ethylene-based polymer composition. Comparative Composition Example (Comp. Composition Ex.) 1 contained 100% ELITE 5230G (a polyethylene commercially available from The Dow Chemical Company). Comparative Composition Example 2 contained 100% DOWLEX 2108G (a Linear Low Density Polyethylene commercially available from The Dow Chemical Company). Comparative Composition Example 3 contained 90 wt% ELITE 5230G and 10 wt% DOWLEX 2108G. Tables 1-5 provide various properties for Inventive Composition Examples 1-3 and Comparative Composition Examples 1-3.

**Table 1**

| | Mn (g/mol) | Mp (g/mol) | Mw (g/mol) | Mz (g/mol) | Mw/Mn | Mz/Mw |
|---|---|---|---|---|---|---|
| **Inv. Comp. Ex. 1** | 31799 | 56763 | 70176 | 129086 | 2.21 | 1.84 |
| **Inv. Comp. Ex. 2** | 20900 | 34778 | 71948 | 167252 | 3.44 | 2.32 |
| **Inv. Comp. Ex. 3** | 30203 | 54350 | 73442 | 144152 | 2.43 | 1.96 |
| **Comp. Composition Ex. 1** | 25592 | 62374 | 75116 | 152617 | 2.94 | 2.03 |
| **Comp. Composition Ex. 2** | 27562 | 57635 | 88966 | 232743 | 3.23 | 2.62 |

**Table 2**

| | Density, $g/cm^3$ | $I_2$ (g/10 min) | $I_{10}/I_2$ |
|---|---|---|---|
| **Inv. Comp. Ex. 1** | 0.920 | 4.0 | 7.2 |
| **Inv. Comp. Ex. 2** | 0.919 | 3.4 | 8.5 |
| **Inv. Comp. Ex. 3** | 0.918 | 3.4 | 7.0 |
| **Comp. Composition Ex. 1** | 0.916 | 4.0 | 6.9 |
| **Comp. Composition Ex. 2** | 0.935 | 2.6 | 7.2 |
| **Comp. Composition Ex. 3*** | 0.918 | 3.7 | Not available |
| * Values for Comp. Composition Ex. 3 were calculated based upon component polymer values. | | | |

**Table 3**

| | Unsaturation unit/1,000,000 carbon | | | | |
|---|---|---|---|---|---|
| | **Vinylene** | **Trisubstituted** | **Vinyl** | **Vinylidene** | **Total** |
| **Inv. Comp. Ex. 1** | 3 | None detected (ND) | 18 | 3 | 25 |
| **Inv. Comp. Ex. 2** | 6 | ND | 39 | 3 | 49 |
| **Inv. Comp. Ex. 3** | 4 | ND | 41 | 4 | 49 |
| **Comp. Composition Ex. 1** | 56 | 23 | 162 | 39 | 280 |
| **Comp. Composition Ex. 2** | 24 | 7 | 286 | 24 | 342 |

Table 4

| | CDI | Stdev (°C) | Half Width (°C) | Half Width/Stdev | CDC |
|---|---|---|---|---|---|
| **Inv. Comp. Ex. 1** | 0.766 | 11.518 | 5.553 | 0.482 | 158.9 |
| **Inv. Comp. Ex. 2** | 0.830 | 8.846 | 15.936 | 1.801 | 46.0 |
| **Inv. Comp. Ex. 3** | 0.790 | 9.594 | 4.742 | 0.494 | 159.7 |
| **Comp. Composition Ex. 1** | 0.704 | 12.441 | 6.550 | 0.526 | 133.7 |
| **Comp. Composition Ex. 2** | 0.950 | 9.655 | 5.018 | 0.520 | 182.8 |
| **Comp. Composition Ex. 3** | 0.653 | 13.085 | 6.186 | 0.473 | 138.2 |

Table 5

| | Mw(g/mol) | ZSV (Pas) | ZSVR |
|---|---|---|---|
| **Inv. Comp. Ex. 1** | 70176 | 2420 | 2.16 |
| **Inv. Comp. Ex. 2** | 71948 | 3485 | 2.85 |
| **Inv. Comp. Ex. 3** | 73442 | 2737 | 2.07 |
| **Comp. Composition Ex. 1** | 75116 | 2241 | 1.56 |
| **Comp. Composition Ex. 2** | 88966 | 3374 | 1.27 |

## Turf Yarn Production

Inventive Turf Yarn Examples (Inv. TY Ex.) 1-3 were prepared from Inventive Composition Examples 1-3, respectively. Each of the Inventive Turf Yarn Examples contained 93.5 percent by weight of the Inventive Composition Example, 6 percent by weight of ARGUS GREEN G16-130UV and 0.5 percent by weight of ARGUS ARX/41 PA01 LD process aid (each of which are commercially available from Argus Additive Plastics GbmH, Büren, Germany). The conditions of monofilament formation and resulting monofilament properties are shown in Table 6 below. Comparative Turf Yarn Example (Comp. TY Ex.) 1 was prepared from 93.5 weight percent Comp. Composition Ex. 3, 6 weight percent ARGUS GREEN G16-130UV and 0.5 percent by weight of ARGUS ARX/41 PA01 LD process aid. The additives were blended with the polymer compositions prior to extrusion. Each of the Turf Yarn Examples was prepared on a compact three oven extrusion line from Oerlikon Barmag (Remscheid, Germany) as described hereinabove. The specific conditions of the equipment used in preparing the Turf Yarn Examples is provided in Table 6 below. Table 6 further provides physical properties for each of the Turf Yarn Examples.

Table 6

| | Comp. TY Ex. 1 | Inv. TY Ex. 1 | Inv. TY Ex. 2 | Inv. TY Ex 3 |
|---|---|---|---|---|
| **Die - water mm** | 45 | 45 | 45 | 45 |
| **Temp. rollers before oven #1, °C** | 80 | 80 | 80 | 80 |
| **Stretching ratio** | 5.42 | 5.00 | 5.00 | 5.00 |
| **Temp oven 1, °C** | 95 | 95 | 95 | 95 |
| **Temp. rollers before oven #2, °C** | 110 | 110 | 110 | 110 |
| **Relaxation ratio** | 0.74 | 0.79 | 0.78 | 0.80 |
| **Temp. oven 2, °C** | 118 | 118 | 118 | 118 |
| **Temp rollers before oven #3, °C** | 100 | 100 | 100 | 100 |
| **Relaxation ratio** | 1.02 | 1.03 | 1.03 | 1.01 |
| **Temp. oven #3, °C** | 115 | 115 | 115 | 115 |
| **Temp rollers after oven #3, °C** | 30 | 30 | 30 | 30 |

(continued)

| | Comp. TY Ex. 1 | Inv. TY Ex. 1 | Inv. TY Ex. 2 | Inv. TY Ex 3 |
|---|---|---|---|---|
| **Final speed m/min** | 130 | 130 | 130.5 | 130 |
| **Melt pump rpm** | 36.2 | 36.2 | 35 | 36.2 |
| **Tool pressure, bar** | 100.0 | 94.7 | 99.2 | 91.5 |
| **Melt Temperature °C** | 234.6 | 233.7 | 234.2 | 230.5 |
| **Linear weight (Titer) / dtex** | 1990 | 1992 | 2022 | 2002 |
| **Stability, cN/dtex** | 1.06 | 1.15 | 1.13 | 1.02 |
| **Residual Elongation, %** | 79.2 | 86.7 | 82.1 | 70.6 |
| **Shrink, %** | 4.9 | 3.6 | 3.8 | 4.2 |
| **Curl ratio** | 0.56 | 0.39 | 0.32 | 0.27 |

Each of the Inventive and Comparative Turf Yarn Examples. Methods of forming artificial turf are known. The Turf Yarn Examples were tested using the curl method for twist and curl. Inventive Turf Yarn Example 3 showed the lowest twist and curl, corresponding to the lowest residual stress in the yarn. Inventive Turf Yarn Examples 1 and 2 also showed very low twist and curl in comparison to Comparative Turf Yarn Example 1.

## Composition Test Methods

Polymer composition test methods include the following:

### Density

Samples for density measurement are prepared according to ASTM D 1928. Measurements are made within one hour of sample pressing using ASTM D792, Method B.

### Melt Index

Melt index, or $I_2$, is measured in accordance with ASTM D 1238, Condition 190°C/2.16 kg. $I_{10}$ is measured in accordance with ASTM D 1238, Condition 190°C/10 kg.

### Gel Permeation Chromatography (GPC)

The GPC system consists of a Waters (Milford, MA) 150°C high temperature chromatograph (other suitable high temperatures GPC instruments include Polymer Laboratories (Shropshire, UK) Model 210 and Model 220) equipped with an on-board differential refractometer (RI). Additional detectors can include an IR4 infra-red detector from Polymer ChAR (Valencia, Spain), Precision Detectors (Amherst, MA) 2-angle laser light scattering detector Model 2040, and a Viscotek (Houston, TX) 150R 4-capillary solution viscometer. A GPC with the last two independent detectors and at least one of the first detectors is sometimes referred to as "3D-GPC", while the term "GPC" alone generally refers to conventional GPC. Depending on the sample, either the 15-degree angle or the 90-degree angle of the light scattering detector is used for calculation purposes. Data collection is performed using Viscotek TriSEC software, Version 3, and a 4-channel Viscotek Data Manager DM400. The system is also equipped with an on-line solvent degassing device from Polymer Laboratories (Shropshire, UK). Suitable high temperature GPC columns can be used such as four 30 cm long Shodex HT803 13 micron columns or four 30 cm Polymer Labs columns of 20-micron mixed-pore-size packing (MixA LS, Polymer Labs). The sample carousel compartment is operated at 140 °C and the column compartment is operated at 150 °C. The samples are prepared at a concentration of 0.1 grams of polymer in 50 milliliters of solvent. The chromatographic solvent and the sample preparation solvent contain 200 ppm of butylated hydroxytoluene (BHT). Both solvents are sparged with nitrogen. The polyethylene samples are gently stirred at 160 °C for four hours. The injection volume is 200 microliters. The flow rate through the GPC is set at 1 ml/minute.

The GPC column set is calibrated before running the Examples by running twenty-one narrow molecular weight distribution polystyrene standards. The molecular weight (MW) of the standards ranges from 580 to 8,400,000 grams per mole, and the standards are contained in 6 "cocktail" mixtures. Each standard mixture has at least a decade of

separation between individual molecular weights. The standard mixtures are purchased from Polymer Laboratories (Shropshire, UK). The polystyrene standards are prepared at 0.025 g in 50 mL of solvent for molecular weights equal to or greater than 1,000,000 grams per mole and 0.05 g in 50 ml of solvent for molecular weights less than 1,000,000 grams per mole. The polystyrene standards were dissolved at 80 °C with gentle agitation for 30 minutes. The narrow standards mixtures are run first and in order of decreasing highest molecular weight component to minimize degradation. The polystyrene standard peak molecular weights are converted to polyethylene $M_w$ using the Mark-Houwink K and a (sometimes referred to as $\alpha$) values mentioned later for polystyrene and polyethylene. See the Examples section for a demonstration of this procedure.

With 3D-GPC, absolute weight average molecular weight ("$M_{w,\ Abs}$") and intrinsic viscosity are also obtained independently from suitable narrow polyethylene standards using the same conditions mentioned previously. These narrow linear polyethylene standards may be obtained from Polymer Laboratories (Shropshire, UK; Part No.'s PL2650-0101 and PL2650-0102).

The systematic approach for the determination of multi-detector offsets is performed in a manner consistent with that published by Balke, Mourey, et al. (Mourey and Balke, Chromatography Polym., Chapter 12, (1992)) (Balke, Thitiratsakul, Lew, Cheung, Mourey, Chromatography Polym., Chapter 13, (1992)), optimizing triple detector log ($M_w$ and intrinsic viscosity) results from Dow 1683 broad polystyrene (American Polymer Standards Corp.; Mentor, OH) or its equivalent to the narrow standard column calibration results from the narrow polystyrene standards calibration curve. The molecular weight data, accounting for detector volume off-set determination, are obtained in a manner consistent with that published by Zimm (Zimm, B.H., J. Chem. Phys., 16, 1099 (1948)) and Kratochvil (Kratochvil, P., Classical Light Scattering from Polymer Solutions, Elsevier, Oxford, NY (1987)). The overall injected concentration used in the determination of the molecular weight is obtained from the mass detector area and the mass detector constant derived from a suitable linear polyethylene homopolymer, or one of the polyethylene standards. The calculated molecular weights are obtained using a light scattering constant derived from one or more of the polyethylene standards mentioned and a refractive index concentration coefficient, dn/dc, of 0.104. Generally, the mass detector response and the light scattering constant should be determined from a linear standard with a molecular weight in excess of about 50,000 daltons. The viscometer calibration can be accomplished using the methods described by the manufacturer or alternatively by using the published values of suitable linear standards such as Standard Reference Materials (SRM) 1475a, 1482a, 1483, or 1484a. The chromatographic concentrations are assumed low enough to eliminate addressing 2$^{nd}$ virial coefficient effects (concentration effects on molecular weight).

**Crystallization Elution Fractionation (CEF) Method**

Comonomer distribution analysis is performed with Crystallization Elution Fractionation (CEF) (PolymerChar in Spain) (B Monrabal et al, Macromol. Symp. 257, 71-79 (2007)). Ortho-dichlorobenzene (ODCB) with 600ppm antioxidant butylated hydroxytoluene (BHT) is used as solvent. Sample preparation is done with autosampler at 160° C for 2 hours under shaking at 4 mg/ml (unless otherwise specified). The injection volume is 300 $\mu$l. The temperature profile of CEF is: crystallization at 3° C/min from 110° C to 30° C, the thermal equilibrium at 30° C for 5 minutes, elution at 3° C/min from 30° C to 140° C. The flow rate during crystallization is at 0.052 ml/min. The flow rate during elution is at 0.50 ml/min. The data is collected at one data point/second. CEF column is packed by The Dow Chemical Company with glass beads at 125 $\mu$m$\pm$ 6% (MO-SCI Specialty Products) with 1/8 inch stainless tubing. Glass beads are acid washed by MO-SCI Specialty with the request from The Dow Chemical Company. Column volume is 2.06 ml. Column temperature calibration is performed by using a mixture of NIST Standard Reference Material Linear polyethylene 1475a (1.0mg/ml) and Eicosane (2mg/ml) in ODCB. Temperature is calibrated by adjusting elution heating rate so that NIST linear polyethylene 1475a has a peak temperature at 101.0°C, and Eicosane has a peak temperature of 30.0° C. The CEF column resolution is calculated with a mixture of NIST linear polyethylene 1475a (1.0mg/ml) and hexacontane (Fluka, purum, $\geq$97.0%, 1mg/ml). A baseline separation of hexacontane and NIST polyethylene 1475a is achieved. The area of hexacontane (from 35.0 to 67.0° C) to the area of NIST 1475a from 67.0 to 110.0°C is 50 to 50, the amount of soluble fraction below 35.0° C is <1.8 wt%. The CEF column resolution is defined in the following equation:

$$\text{Resolution} = \frac{\text{Peak temperature of NIST 1475a - Peak Temperature of Hexacontane}}{\text{Half - height Width of NIST 1475a} + \text{Half - height Width of Hexacontane}}$$

where the column resolution is 6.0.

**Comonomer Distribution Constant (CDC) Method**

Comonomer distribution constant (CDC) is calculated from comonomer distribution profile by CEF. CDC is

defined as Comonomer Distribution Index divided by Comonomer Distribution Shape Factor multiplying by 100 as shown in the following equation:

$$CDC = \frac{\textit{Comonomer Distrubution Index}}{\textit{Comonomer Distribution Shape Factor}} = \frac{\textit{Comonomer Distribution Index}}{\textit{Half Width/Stdev}} * 100$$

Comonomer distribution index stands for the total weight fraction of polymer chains with the comonomer content ranging from 0.5 of median comonomer content ($C_{median}$) and 1.5 of $C_{median}$ from 35.0 to 119.0° C. Comonomer Distribution Shape Factor is defined as a ratio of the half width of comonomer distribution profile divided by the standard deviation of comonomer distribution profile from the peak temperature ($T_p$).

CDC is calculated from comonomer distribution profile by CEF, and CDC is defined as Comonomer Distribution Index divided by Comonomer Distribution Shape Factor multiplying by 100 as shown in the following Equation:

$$CDC = \frac{\textit{Comonomer Distrubution Index}}{\textit{Comonomer Distribution Shape Factor}} = \frac{\textit{Comonomer Distribution Index}}{\textit{Half Width/Stdev}} * 100$$

wherein Comonomer distribution index stands for the total weight fraction of polymer chains with the comonomer content ranging from 0.5 of median comonomer content ($C_{median}$) and 1.5 of $C_{median}$ from 35.0 to 119.0° C, and wherein Comonomer Distribution Shape Factor is defined as a ratio of the half width of comonomer distribution profile divided by the standard deviation of comonomer distribution profile from the peak temperature (Tp).

CDC is calculated according to the following steps:

(A) Obtain a weight fraction at each temperature ($T$) ($w_T(T)$) from 35.0° C to 119.0° C with a temperature step increase of 0.200° C from CEF according to the following Equation:

$$\int_{35}^{119.0} w_T(T)dT = 1$$

(B) Calculate the median temperature ($T_{median}$) at cumulative weight fraction of 0.500, according to the following Equation:

$$\int_{35}^{T_{median}} w_T(T)dT = 0.5$$

(C) Calculate the corresponding median comonomer content in mole % ($C_{median}$) at the median temperature ($T_{median}$) by using comonomer content calibration curve according to the following Equation:

$$\ln(1 - \textit{comonomerc ontent}) = -\frac{207.26}{273.12 + T} + 0.5533$$

$$R^2 = 0.997$$

(D) Construct a comonomer content calibration curve by using a series of reference materials with known amount of comonomer content, i.e., eleven reference materials with narrow comonomer distribution (mono-modal comonomer distribution in CEF from 35.0 to 119.0° C) with weight average $M_w$ of 35,000 to 115,000 (measured via conventional GPC) at a comonomer content ranging from 0.0 mole% to 7.0 mole% are analyzed with CEF at the same experimental conditions specified in CEF experimental sections;

(E) Calculate comonomer content calibration by using the peak temperature ($T_p$) of each reference material and its comonomer content; The calibration is calculated from each reference material according to the following Equation:

$$\ln(1 - comonomercontent) = -\frac{207.26}{273.12 + T} + 0.5533$$

$$R^2 = 0.997$$

wherein: $R^2$ is the correlation constant;

(F) Calculate Comonomer Distribution Index from the total weight fraction with a comonomer content ranging from 0.5 *$C_{median}$ to 1.5* $C_{median}$, and if $T_{median}$ is higher than 98.0° C, Comonomer Distribution Index is defined as 0.95;

(G) Obtain Maximum peak height from CEF comonomer distribution profile by searching each data point for the highest peak from 35.0° C to 119.0° C (if the two peaks are identical, then the lower temperature peak is selected); half width is defined as the temperature difference between the front temperature and the rear temperature at the half of the maximum peak height, the front temperature at the half of the maximum peak is searched forward from 35.0° C, while the rear temperature at the half of the maximum peak is searched backward from 119.0° C, in the case of a well defined bimodal distribution where the difference in the peak temperatures is equal to or greater than the 1.1 times of the sum of half width of each peak, the half width of the inventive ethylene-based polymer composition is calculated as the arithmetic average of the half width of each peak;

(H) Calculate the standard deviation of temperature (*Stdev*) according the following Equation:

$$Stdev = \sqrt{\sum_{35.0}^{119.0} (T - T_p)^2 * w_T(T)}$$

**Creep Zero Shear Viscosity Measurement Method**

Zero-shear viscosities are obtained via creep tests that were conducted on an AR-G2 stress controlled rheometer (TA Instruments; New Castle, Del) using 25-mm-diameter parallel plates at 190° C. The rheometer oven is set to test temperature for at least 30 minutes prior to zeroing fixtures. At the testing temperature a compression molded sample disk is inserted between the plates and allowed to come to equilibrium for 5 minutes. The upper plate is then lowered down to 50 μm above the desired testing gap (1.5 mm). Any superfluous material is trimmed off and the upper plate is lowered to the desired gap. Measurements are done under nitrogen purging at a flow rate of 5 L/min. Default creep time is set for 2 hours.

A constant low shear stress of 20 Pa is applied for all of the samples to ensure that the steady state shear rate is low enough to be in the Newtonian region. The resulting steady state shear rates are in the range of $10^{-3}$ to $10^{-4}$ $s^{-1}$ for the samples in this study. Steady state is determined by taking a linear regression for all the data in the last 10% time window of the plot of log (J(t)) vs. log(t), where J(t) is creep compliance and t is creep time. If the slope of the linear regression is greater than 0.97, steady state is considered to be reached, then the creep test is stopped. In all cases in this study the slope meets the criterion within 2 hours. The steady state shear rate is determined from the slope of the linear regression of all of the data points in the last 10% time window of the plot of ε vs. t, where ε is strain. The zero-shear viscosity is determined from the ratio of the applied stress to the steady state shear rate.

In order to determine if the sample is degraded during the creep test, a small amplitude oscillatory shear test is conducted before and after the creep test on the same specimen from 0.1 to 100 rad/s. The complex viscosity values of the two tests are compared. If the difference of the viscosity values at 0.1 rad/s is greater than 5%, the sample is considered to have degraded during the creep test, and the result is discarded.

**Zero-Shear Viscosity Ratio** (ZSVR) is defined as the ratio of the zero-shear viscosity (ZSV) of the branched polyethylene material to the ZSV of the linear polyethylene material at the equivalent weight average molecular weight (Mw-gpc) according to the following Equation:

$$ZSVR = \frac{\eta_{0B}}{\eta_{0L}} = \frac{\eta_{0B}}{2.29 \times 10^{-15} M_{w-gpc}^{3.65}}$$

The ZSV value is obtained from creep test at 190°C via the method described above. The Mw-gpc value is determined by the conventional GPC method. The correlation between ZSV of linear polyethylene and its Mw-gpc was established based on a series of linear polyethylene reference materials. A description for the ZSV-Mw relationship can

be found in the ANTEC proceeding: Karjala, Teresa P.; Sammler, Robert L.; Mangnus, Marc A.; Hazlitt, Lonnie G.; Johnson, Mark S.; Hagen, Charles M., Jr.; Huang, Joe W. L.; Reichek, Kenneth N. Detection of low levels of long-chain branching in polyolefins. Annual Technical Conference - Society of Plastics Engineers (2008), 66th 887-891.

### $^1$H NMR Method

3.26 g of stock solution is added to 0.133 g of polyolefin sample in 10 mm NMR tube. The stock solution is a mixture of tetrachloroethane-$d_2$ (TCE) and perchloroethylene (50:50, w:w) with 0.001M $Cr^{3+}$. The solution in the tube is purged with $N_2$ for 5 minutes to reduce the amount of oxygen. The capped sample tube is left at room temperature overnight to swell the polymer sample. The sample is dissolved at 110° C with shaking. The samples are free of the additives that may contribute to unsaturation, e.g. slip agents such as erucamide.

The $^1$H NMR are run with a 10 mm cryoprobe at 120° C on Bruker AVANCE 400 MHz spectrometer.

Two experiments are run to get the unsaturation: the control and the double pre-saturation experiments.

For the control experiment, the data is processed with exponential window function with LB=1 Hz, baseline was corrected from 7 to -2 ppm. The signal from residual $^1$H of TCE is set to 100, the integral $I_{total}$ from -0.5 to 3 ppm is used as the signal from whole polymer in the control experiment. The number of $CH_2$ group, $NCH_2$, in the polymer is calculated as following:

$$NCH_2=I_{total}/2$$

For the double presaturation experiment, the data is processed with exponential window function with LB=1 Hz, baseline was corrected from 6.6 to 4.5 ppm. The signal from residual $_1$H of TCE is set to 100, the corresponding integrals for unsaturations ($I_{vinylene}$, $I_{trisubstituted}$, $I_{vinyl}$ and $I_{vinylidene}$) were integrated based on the region shown in the graph in Figure 2.

The number of unsaturation unit for vinylene, trisubstituted, vinyl and vinylidene are calculated:

$$N_{vinylene}=I_{vinylene}/2$$

$$N_{trisubstituted}=I_{trisubstitute}$$

$$N_{vinyl}=I_{vinyl}/2$$

$$N_{vinylidene}=I_{vinylidene}/2$$

The unsaturation unit/ 1,000,000 carbons is calculated as following:

$$N_{vinylene}/1,000,000C = (N_{vinylene}/NCH_2)*1,000,000$$

$$N_{trisubstituted}/1,000,000C = (N_{trisubstituted}/NCH_2)*1,000,000$$

$$N_{vinyl}/1,000,000C = (N_{vinyl}/NCH_2)*1,000,000$$

$$N_{vinylidene}/1,000,000C = (N_{vinylidene}/NCH_2)*1,000,000$$

The requirement for unsaturation NMR analysis includes: level of quantitation is 0.47 ± 0.02/1,000,000 carbons for Vd2 with 200 scans (less than 1 hour data acquisition including time to run the control experiment) with 3.9 wt% of sample (for Vd2 structure, see Macromolecules, vol. 38, 6988, 2005), 10 mm high temperature cryoprobe. The level of quantitation is defined as signal to noise ratio of 10.

The chemical shift reference is set at 6.0 ppm for the $^1$H signal from residual proton from TCT-d2. The control is run with ZG pulse, TD 32768, NS 4, DS 12, SWH 10,000 Hz, AQ 1.64s, D1 14s. The double presaturation experiment is run with a modified pulse sequence, O1P 1.354 ppm, O2P 0.960 ppm, PL9 57db, PL21 70 db, TD 32768, NS 200, DS 4, SWH 10,000 Hz, AQ 1.64s, D1 1 s, D13 13s. The modified pulse sequences for unsaturation with Bruker AVANCE 400 MHz spectrometer are shown below:

```
;lc1prf2_zz
prosol relations=<lcnmr>
#include <Avance.incl>

"d12=20u"
"d11=4u"

1 ze
d12 pl21:f2
2 30m
d13
d12 pl9:f1
d1 cw:f1 ph29 cw:f2 ph29
d11 do:f1 do:f2
d12 pl1:f1
p1 ph1
go=2 ph31
30m mc #0 to 2 F0(zd)
exit

ph1=0 2 2 0 1 3 3 1
ph29=0
ph31=0 2 2 0 1 3 3 1
```

**Turf Yarn Test Methods**

The following test methods were used to measure various properties of the turf yarns, prepared as described above on a three oven process.

Linear Weight: The linear weight (in dtex) of a monofilament is equal to the weight in grams of 50 meters of the monofilament and extrapolating that measurements to obtain the weight of 10 km of the monofilament.

Stability and Residual Elongation: Stability and residual elongation were measured on a Zwick tensile tester on a filament length of 260 mm and an extension rate of 250 mm/min until the filament breaks. Stability is defined as the tensile force at break divided by the linear weight (dtex). Residual elongation is the strain at break.

Shrink: The shrink of a monofilament (expressed as the percentage reduction in length of a 1 meter sample of the monofilament) is measured by immersing the monofilament for 20 seconds in a bath of silicon oil maintained at 90° C.

Curl: Curl is measured by taking yarn from the bobbin and bending 2 x 8 filaments into a brush and fixing them by tape. The brush is hung on a hook for 5 minutes at 90 °C in a hot air oven. Thereafter, a photograph is taken of the brush and the spread of the fibers (**10** in Fig. 1) at their tip is divided by the length of the brush (**20** in Fig. 1) to calculate the curl.

Unless otherwise stated, implicit from the context or conventional in the art, all parts and percentages are based on weight.

**Claims**

**1.** An artificial turf comprising:

a turf yarn prepared from an ethylene-based polymer composition comprising:

less than 100 percent by weight of the units derived from ethylene; and
less than 30 percent by weight of units derived from one or more $\alpha$-olefin comonomers;

wherein said ethylene-based polymer composition is **characterized by** having a Comonomer Distribution Constant of equal to or greater than 40, a vinyl unsaturation of less than 100 vinyls per one million carbon atoms present in the backbone of the ethylene-based polymer composition; a zero shear viscosity ratio (ZSVR) equal to or greater than 1.75; a density in the range of 0.915 to 0.930 g/cm$^3$, a melt index ($I_2$) in the range of from 0.8 to 5 g/10 minutes, a molecular weight distribution ($M_w/M_n$) in the range of from 2 to 3.6, and a molecular weight distribution ($M_z/M_w$) equal to or less than 3; and

wherein the turf yarn exhibits the following properties (a) shrink of less than 4.8 %, and (b) curl of less than 0.5, measured as defined in the present description.

**2.** The artificial turf according to Claim 1, wherein the turf yarn exhibits a shrink of less than 4.5%, measured as defined in the present description.

**3.** The artificial turf according to any one of the preceding Claims, wherein the turf yarn exhibits a curl of less than 0.4, measured as defined in the present description.

**4.** The artificial turf according to any one of the preceding Claims, wherein the ethylene-based polymer composition has an $I_2$ from 2 to 4.

**5.** The artificial turf according to any one of the preceding Claims, wherein the turf yarn exhibits an elongation at break of at least 65%.

**6.** The artificial turf according to any one of the preceding Claims, wherein the turf yarn exhibits a stability of 0.9 cN/dtex.

**7.** A method of preparing an artificial turf comprising:

selecting an ethylene-based polymer composition comprising:

less than 100 percent by weight of the units derived from ethylene; and
less than 30 percent by weight of units derived from one or more $\alpha$-olefin comonomers;
wherein said ethylene-based polymer composition is **characterized by** having a Comonomer Distribution Constant of equal to or greater than 40, a vinyl unsaturation of less than 100 vinyls per one million carbon atoms present in the backbone of the ethylene-based polymer composition; a zero shear viscosity ratio (ZSVR) equal to or greater than 1.75; a density in the range of 0.915 to 0.930 g/cm$^3$, a melt index ($I_2$) in the range of from 0.8 to 5 g/10 minutes, a molecular weight distribution ($M_w/M_n$) in the range of from 2 to 3.6, and a molecular weight distribution ($M_z/M_w$) equal to or less than 3; and

preparing a turf yarn from the ethylene-based polymer composition;
wherein the turf yarn exhibits the following properties (a) shrink of less than 4.8 %, and (b) curl of less than 0.5, measured as defined in the present description.

**8.** The method according to Claim 7, wherein the turf yarn exhibits a shrink of less than 4.5%, measured as defined in the present description.

**9.** The method according to any one of Claims 7-8, wherein the turf yarn exhibits a curl of less than 0.4, measured as defined in the present description.

**10.** The method according to any one of Claims 7-9, wherein the ethylene-based polymer composition has an $I_2$ from 2 to 4.

**11.** The method according to any one of Claims 7-10, wherein the turf yarn exhibits an elongation at break of at least 65%.

**12.** The method according to any one of Claims 7-11, wherein the turf yarn exhibits a stability of 0.9 cN/dtex.

**Patentansprüche**

**1.** Ein Kunstrasen, beinhaltend:

ein Rasengarn, hergestellt aus einer ethylenbasierten Polymerzusammensetzung, die Folgendes beinhaltet:

zu weniger als 100 Gewichtsprozent die von Ethylen abgeleiteten Einheiten; und
zu weniger als 30 Gewichtsprozent von einem oder mehreren $\alpha$-Olefincomonomeren abgeleitete Einheiten; wobei die ethylenbasierte Polymerzusammensetzung **dadurch gekennzeichnet ist, dass** sie Folgendes aufweist: eine Comonomerverteilungskonstante von gleich oder größer als 40, eine Vinylungesättigtheit von weniger als 100 Vinyl pro Million Kohlenstoffatome, die in der Hauptkette der ethylenbasierten Polymerzusammensetzung vorliegen; ein Nullscherviskositätsverhältnis (ZSVR) gleich oder größer als 1,75; eine Dichte im Bereich von 0,915 bis 0,930 g/cm$^3$, einen Schmelzindex ($I_2$) im Bereich von 0,8 bis 5 g/10 Minuten, eine Molekulargewichtsverteilung ($M_w/M_n$) im Bereich von 2 bis 3,6 und eine Molekulargewichtsverteilung ($M_z/M_w$) gleich oder weniger als 3; und

wobei das Rasengarn die folgenden Eigenschaften zeigt: (a) Schrumpfung von weniger als 4,8 % und (b) Kräuselung von weniger als 0,5, gemessen wie in der vorliegenden Beschreibung definiert.

2. Kunstrasen gemäß Anspruch 1, wobei das Rasengarn eine Schrumpfung von weniger als 4,5 % zeigt, gemessen wie in der vorliegenden Beschreibung definiert.

3. Kunstrasen gemäß einem der vorhergehenden Ansprüche, wobei das Rasengarn eine Kräuselung von weniger als 0,4 zeigt, gemessen wie in der vorliegenden Beschreibung definiert.

4. Kunstrasen gemäß einem der vorhergehenden Ansprüche, wobei die ethylenbasierte Polymerzusammensetzung einen $I_2$ von 2 bis 4 aufweist.

5. Kunstrasen gemäß einem der vorhergehenden Ansprüche, wobei das Rasengarn eine Bruchdehnung von mindestens 65 % zeigt.

6. Kunstrasen gemäß einem der vorhergehenden Ansprüche, wobei das Rasengarn eine Stabilität von 0,9 cN/dtex zeigt.

7. Ein Verfahren zum Herstellen eines Kunstrasens, beinhaltend:

Auswählen einer ethylenbasierten Polymerzusammensetzung, die Folgendes beinhaltet:

zu weniger als 100 Gewichtsprozent die von Ethylen abgeleiteten Einheiten; und
zu weniger als 30 Gewichtsprozent von einem oder mehreren $\alpha$-Olefincomonomeren abgeleitete Einheiten; wobei die ethylenbasierte Polymerzusammensetzung **dadurch gekennzeichnet ist, dass** sie Folgendes aufweist: eine Comonomerverteilungskonstante von gleich oder größer als 40, eine Vinylungesättigtheit von weniger als 100 Vinyl pro Million Kohlenstoffatome, die in der Hauptkette der ethylenbasierten Polymerzusammensetzung vorliegen; ein Nullscherviskositätsverhältnis (ZSVR) gleich oder größer als 1,75; eine Dichte im Bereich von 0,915 bis 0,930 g/cm$^3$, einen Schmelzindex ($I_2$) im Bereich von 0,8 bis 5 g/10 Minuten, eine Molekulargewichtsverteilung ($M_w/M_n$) im Bereich von 2 bis 3,6 und eine Molekulargewichtsverteilung ($M_z/M_w$) gleich oder weniger als 3; und

Herstellen eines Rasengarns aus der ethylenbasierten Polymerzusammensetzung;
wobei das Rasengarn die folgenden Eigenschaften zeigt: (a) Schrumpfung von weniger als 4,8 % und (b) Kräuselung von weniger als 0,5, gemessen wie in der vorliegenden Beschreibung definiert.

8. Verfahren gemäß Anspruch 7, wobei das Rasengarn eine Schrumpfung von weniger als 4,5 % zeigt, gemessen wie in der vorliegenden Beschreibung definiert.

9. Verfahren gemäß einem der Ansprüche 7-8, wobei das Rasengarn eine Kräuselung von weniger als 0,4 zeigt, gemessen wie in der vorliegenden Beschreibung definiert.

10. Verfahren gemäß einem der Ansprüche 7-9, wobei die ethylenbasierte Polymerzusammensetzung einen $I_2$ von 2 bis 4 aufweist.

11. Verfahren gemäß einem der Ansprüche 7-10, wobei das Rasengarn eine Bruchdehnung von mindestens 65 % zeigt.

**12.** Verfahren gemäß einem der Ansprüche 7-11, wobei das Rasengarn eine Stabilität von 0,9 cN/dtex zeigt.

**Revendications**

**1.** Un gazon artificiel comprenant :

un fil de gazon préparé à partir d'une composition de polymère à base d'éthylène comprenant :

moins de 100 pour cent en poids des unités dérivées de l'éthylène ; et
moins de 30 pour cent en poids d'unités dérivées d'un ou de plusieurs comonomères d'$\alpha$-oléfine ;
où ladite composition de polymère à base d'éthylène est **caractérisée par** le fait d'avoir une constante de distribution de comonomère égale ou supérieure à 40, une insaturation vinylique inférieure à 100 vinyles pour un million d'atomes de carbone présents dans le squelette de la composition de polymère à base d'éthylène ; un rapport de viscosité de cisaillement zéro (ZSVR) égal ou supérieur à 1,75 ; une masse volumique comprise dans l'intervalle de 0,915 à 0,930 g/cm$^3$, un indice de fluidité à chaud ($I_2$) compris dans l'intervalle allant de 0,8 à 5 g/10 minutes, une distribution des masses moléculaires ($M_w/M_n$) comprise dans l'intervalle allant de 2 à 3,6, et une distribution des masses moléculaires ($M_z/M_w$) égale ou inférieure à 3 ; et

où le fil de gazon présente les propriétés suivantes (a) un rétrécissement inférieur à 4,8 %, et (b) une incurvation inférieure à 0,5, mesurés tel que défini dans la présente description.

**2.** Le gazon artificiel selon la revendication 1, où le fil de gazon présente un rétrécissement inférieur à 4,5 %, mesuré tel que défini dans la présente description.

**3.** Le gazon artificiel selon l'une quelconque des revendications précédentes, où le fil de gazon présente une incurvation inférieure à 0,4, mesurée tel que défini dans la présente description.

**4.** Le gazon artificiel selon l'une quelconque des revendications précédentes, où la composition de polymère à base d'éthylène a un $I_2$ allant de 2 à 4.

**5.** Le gazon artificiel selon l'une quelconque des revendications précédentes, où le fil de gazon présente un allongement à la rupture d'au moins 65 %.

**6.** Le gazon artificiel selon l'une quelconque des revendications précédentes, où le fil de gazon présente une stabilité de 0,9 cN/dtex.

**7.** Une méthode de préparation d'un gazon artificiel comprenant :

le fait de sélectionner une composition de polymère à base d'éthylène comprenant :

moins de 100 pour cent en poids des unités dérivées de l'éthylène ; et
moins de 30 pour cent en poids d'unités dérivées d'un ou de plusieurs comonomères d'$\alpha$-oléfine ;
où ladite composition de polymère à base d'éthylène est **caractérisée par** le fait d'avoir une constante de distribution de comonomère égale ou supérieure à 40, une insaturation vinylique inférieure à 100 vinyles pour un million d'atomes de carbone présents dans le squelette de la composition de polymère à base d'éthylène ; un rapport de viscosité de cisaillement zéro (ZSVR) égal ou supérieur à 1,75 ; une masse volumique comprise dans l'intervalle de 0,915 à 0,930 g/cm$^3$, un indice de fluidité à chaud ($I_2$) compris dans l'intervalle allant de 0,8 à 5 g/10 minutes, une distribution des masses moléculaires ($M_w/M_n$) comprise dans l'intervalle allant de 2 à 3,6, et une distribution des masses moléculaires ($M_z/M_w$) égale ou inférieure à 3 ; et

le fait de préparer un fil de gazon à partir de la composition de polymère à base d'éthylène ;
où le fil de gazon présente les propriétés suivantes (a) un rétrécissement inférieur à 4,8 %, et (b) une incurvation inférieure à 0,5, mesurés tel que défini dans la présente description.

**8.** La méthode selon la revendication 7, où le fil de gazon présente un rétrécissement inférieur à 4,5 %, mesuré tel que défini dans la présente description.

**9.** La méthode selon l'une quelconque des revendications 7 à 8, où le fil de gazon présente une incurvation inférieure à 0,4, mesurée tel que défini dans la présente description.

**10.** La méthode selon l'une quelconque des revendications 7 à 9, où la composition de polymère à base d'éthylène a un $I_2$ allant de 2 à 4.

**11.** La méthode selon l'une quelconque des revendications 7 à 10, où le fil de gazon présente un allongement à la rupture d'au moins 65 %.

**12.** La méthode selon l'une quelconque des revendications 7 à 11, où le fil de gazon présente une stabilité de 0,9 cN/dtex.

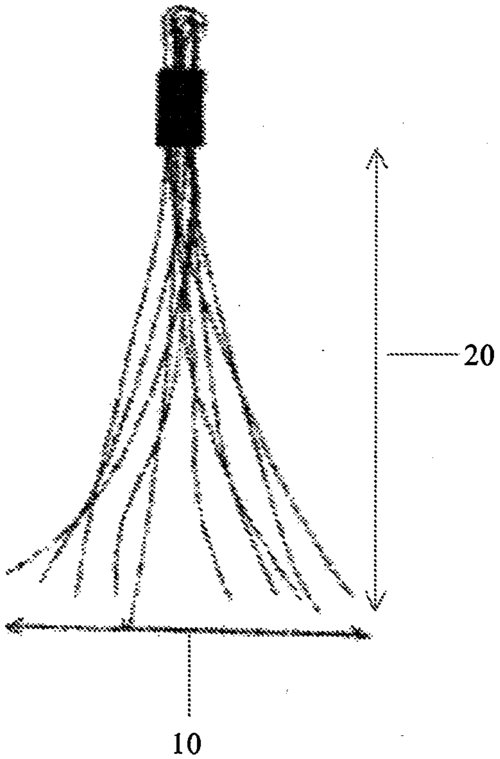


FIG. 1

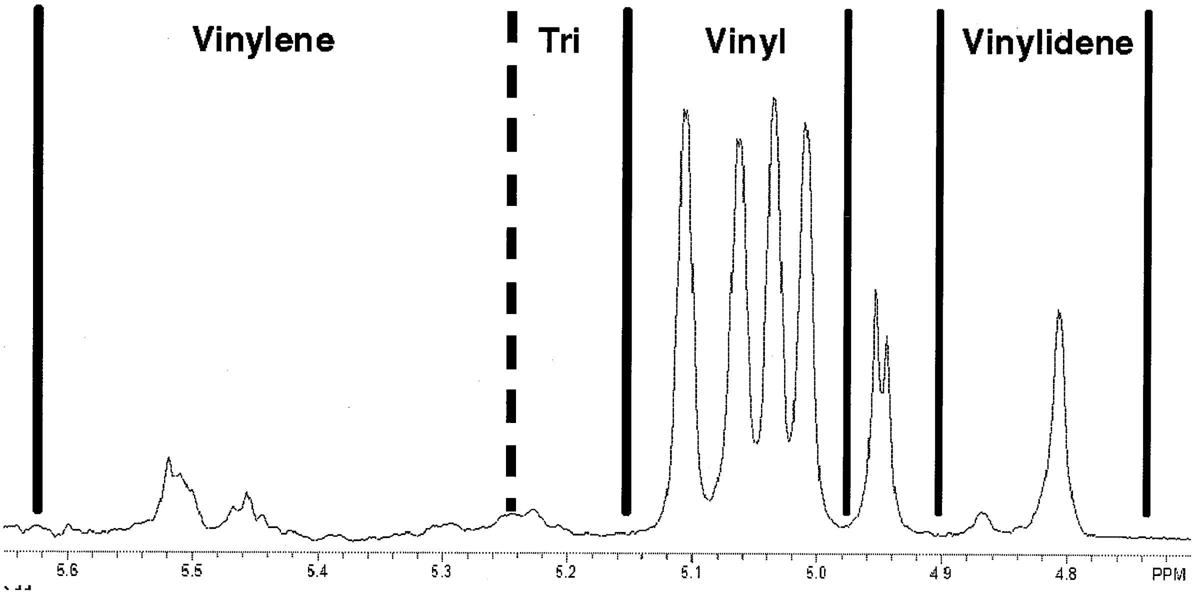


Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006066777 A
- WO 2010006097 A
- PL 26500101
- PL 26500102


### Non-patent literature cited in the description


- **MOUREY ; BALKE.** *Chromatography Polym.,* 1992
- **BALKE ; THITIRATSAKUL ; LEW ; CHEUNG ; MOUREY.** *Chromatography Polym.,* 1992
- **ZIMM, B.H.** *J. Chem. Phys.,* 1948, vol. 16, 1099
- **KRATOCHVIL, P.** Classical Light Scattering from Polymer Solutions. Elsevier, 1987
- **B MONRABAL et al.** *Macromol. Symp.,* 2007, vol. 257, 71-79
- Detection of low levels of long-chain branching in polyolefins. **KARJALA, TERESA P. ; SAMMLER, ROBERT L. ; MANGNUS, MARC A. ; HAZLITT, LONNIE G. ; JOHNSON, MARK S. ; HAGEN, CHARLES M., JR. ; HUANG, JOE W. L. ; REICHEK, KENNETH N.** Annual Technical Conference. Society of Plastics Engineers, 2008, 887-891
- *Macromolecules,* 2005, vol. 38, 6988